# EUROPEAN PATENT SPECIFICATION

(11) **EP 1 038 626 B1**
(45) Date of publication and mention of the grant of the patent: **01.06.2005**
(21) Application number: 00302258.9
(22) Date of filing: 20.03.2000
(51) Int. Cl.: B23K 9/08, B23K 9/20, B23K 9/073

(54) **Welding device with a field former**
Schweissvorrichtung mit einer Feldserzeugung
Appareil de soudage avec production d'un champ

(30) Priority: 22.03.1999 DE 29905259 U
(43) Date of publication of application: 27.09.2000
(73) Proprietor: Newfrey LLC, Newark, Delaware 19711 (US)
(72) Inventor: Kurz, Roland, 35440 Linden-Leihgestern (DE)
(74) Representative: Haar, Lucas H., Dipl.-Ing.

(56) References cited:
- DE-A- 4 415 175
- DE-C- 4 400 957
- DE-C- 19 545 607
- DE-C- 19 713 344
- FR-A- 1 121 520
- US-A- 1 854 536
- US-A- 2 936 363
- PATENT ABSTRACTS OF JAPAN vol. 1995, no. 11, 26 December 1995 (1995-12-26) & JP 07 195176 A (NISSAN MOTOR CO LTD), 1 August 1995 (1995-08-01)

## Description

The invention relates to a welding device according to the preambles of, respectively, claims 1 and 2 (see, for example, DE-C-4 400 957), in particular to a welding device for arc welding by lifting and striking.

Welding devices are known for welding a weld part, which comprise a holder for weld parts. The holder is movable substantially perpendicutarly to the surface of a workpiece and away from it. The welding device comprises a system for producing an arc by lifting and striking between the weld part and the surface of the workpiece. To influence the arc, it is known that the welding device is equipped with a system comprising a field former for producing a magnetic field acting on the arc. A welding device of this type is described in DE 44 00 957 C1, which represents the most relevant state of the art. This device is provided with an electromagnetic coil to which a flux guiding part with a truncated cone shaped field former is coupled. The extended surface line of the field former indicates the welding position. A magnetic field component extending substantially radially to the weld part is formed on the substantially annular pole face of the field former. EP 0 167 150 A1 and DE 195 12 094 A1 describe further embodiments of a welding device.

It is also known from DE 197 13 344 C1 a stud welding device comprising a U-shaped support foot with an electromagnetic coil connected to an electric field forming device. The coil is wound around a semi-circularly bent hollow profile of low retentivity steel. The profile has openings on its sides facing the centre of bending, and is connected to a supply pipe for supplying protective gas. This known device is adapted for welding of studs adjacent to arc deflecting iron masses.

An electric welding device for joining two sheet metal parts is disclosed in FR-A-1 121 520. The electrode of this welding device has the shape of a circular disc with parallel side surfaces, which is moved along the welding path while rotating. A permanent horseshoe magnet embraces the disc in the area where the arc is located and produces a field parallel to the axis of rotation. This field deflects the arc in the direction of the welding movement of the disc.

On the basis of the foregoing, the object of the present invention is to develop the known welding device so as to improve the welded joint produced by the welding device in the case of welding non-circular weld parts.

This object is achieved according to the invention by a welding device having the features of claim 1 or by a welding device having the features of claim 2. The sub-claim 3 relates to an advantageous configuration.

. The welding device according to the invention, in particular for arc by lifting and striking, comprises at least one field former consisting at least in part of a low-retentivity steel. The field former influences the magnetic field and therefore also the propagation of the arc. A field former consisting at least in part of low-retentivity steel is particularly effective; in particular if workpieces made of non-magnetic materials are to be welded together.

According to one aspect of the invention, there is proposed a welding device comprising two field formers having at least one straight portion. This allows the arc to be influenced better in the case of non-circular weld parts. It is proposed, in particular, that the field former consists at least in part of a low-retentivity steel.

According to a second aspect of the invention, the welding device is proposed with two U-shaped field formers provided which are spaced with free arms directed toward one another.

It has been found that the magnetic field and therefore also the arc can be influenced sufficiently and adequately for the quality of the welded joint if the field formers are rod-shaped in design. The welding device according to the invention comprises two field formers extending substantially parallel to one another.

According to a further advantageous configuration of the welding device it is proposed that the field formers are connected at both ends to a mouth-piece which can be brought into contact with the surface of the workpiece.

Further details and advantages of the welding devices according to the invention will be described with reference to the embodiments illustrated in the drawings, in which:
Fig. 1 shows a first embodiment of a field former of the welding device in a plan view,
Fig. 2 shows the field former according to Fig. 1 in a section and in a front view,
Fig. 3 shows a second embodiment of a field former of a welding device in a plan view, and
Fig. 4 shows the field former according to Fig. 3 in section and in a front view.

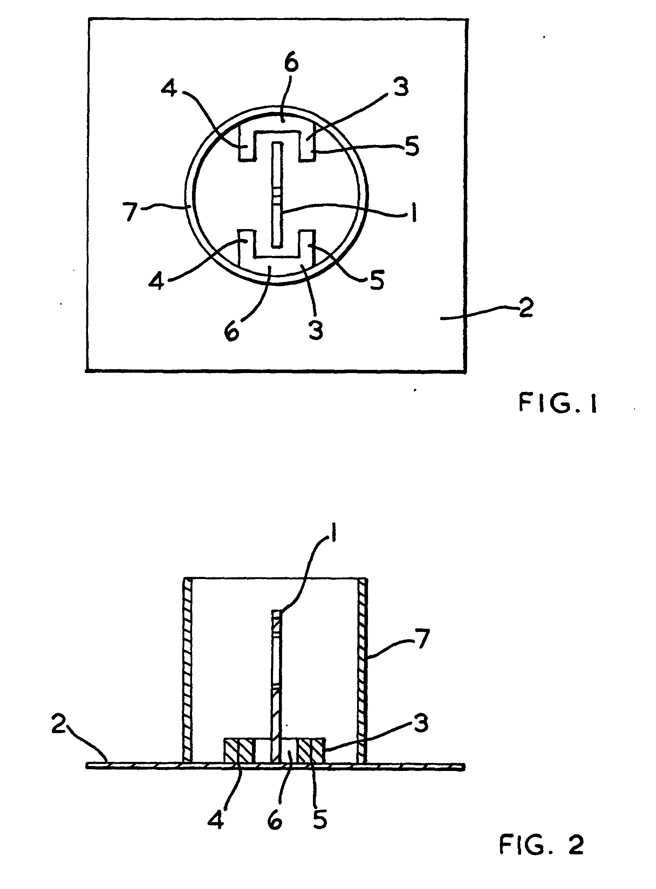

Fig. 1 shows a part of a welding device. The welding device comprises a holder, not shown, for a weld part 1 adapted to be moved substantially perpendicularly to a workpiece surface 2 and away from it. The welding device comprises a system for producing an arc between the weld part 1 and the surface of the workpiece 2. The welding device also comprises a system with a field former 3 for producing a magnetic field which acts on the arc. The field former 3 preferably consists at least in part of a low-retentivity steel. The field former in Fig. 1 is formed by two U-shaped field formers 3. Each field former 3 comprises arms 4, 5 extending substantially parallel to one another. The arms 4, 5 are connected to one another by a common base 6. The two U-shaped field formers 3 are spaced from one another. The end faces of the free arms 4, 5 are directed toward one another. The weld part 1 is arranged between the arms 4, 5.

As shown, in particular, in Fig. 1, the field formers 3 are connected to a mouth-piece 7. The mouth-piece 7 can be brought into contact with the surface of the workpiece 2, as shown in Fig. 2.

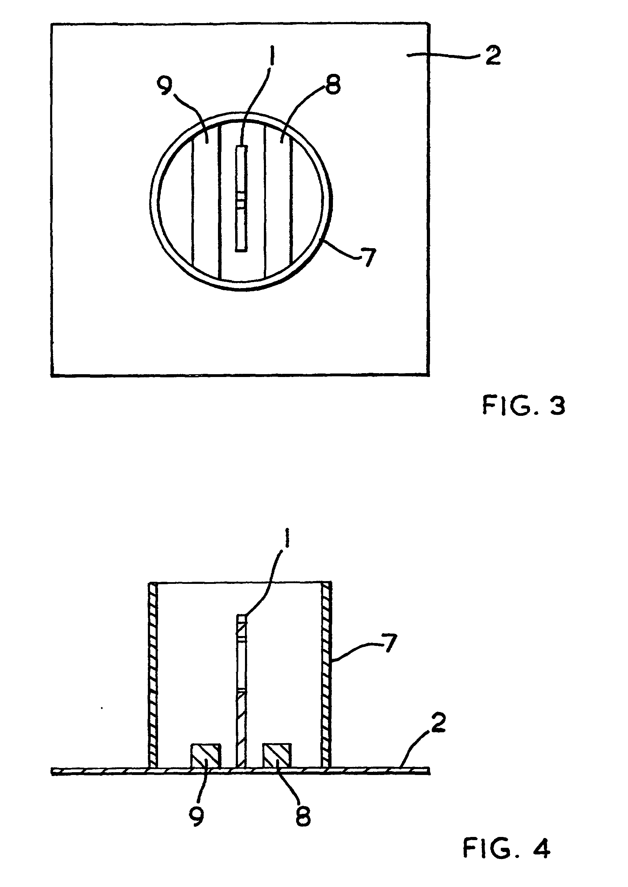

Fig. 3 and 4 show a further embodiment of a welding device. This comprises two field formers 8, 9 which are substantially rod-shaped in design. The two field formers 8, 9 extend substantially parallel to one another. They are spaced from one another so that a weld part 1 can be placed between the field formers 8, 9. The field formers 8, 9 are connected to the mouth-piece 7. The field formers 8, 9 are also preferably field formers which consist at least in part of a low-retentivity steel.

## Claims

1. Welding device with a holder for a weld part (1) to be welded on a workpiece (2), the holder being preferably adapted to be moved substantially perpendicularly to a surface of the workpiece (2) and away from it, the wetding device further comprising a system for producing an arc between the weld part (1) and the surface of the workpiece (2), a mouth-piece (7), which can be brought into contact with the surface of the workpiece (2), and connected to a mouth-piece (7) at least a field former (3) for producing a magnetic field which acts on the arc and consists at least in part of a low-retentivity steel, **characterised in that** two U-shaped field formers (3) are provided at opposite ends of the mouth-piece (7) each field former comprising two free arms (4, 5) connected by a common base (6), wherein the arms (4, 5) of the opposite field formers are directed toward one another and the field formers (3) provide a space between the arms (4, 5) for introducing a weld part (1) with a substantially rectangular cross section.

2. Welding device with a holder for a weld part (1) to be welded on a workpiece (2), the holder being preferably adapted to be moved substantially perpendicularly to a surface of the workpiece (2) and away from it, the welding device further comprising a system for producing an arc between the weld part (1) and the surface of the workpiece (2) and a system with at least a field former (8, 9) for producing a magnetic field which acts on the arc and consists at least in part of a low-retentivity steel, **characterised in that** two field formers (8, 9) are provided which are substantially rod-shaped in design, connected to the system and extend substantially parallel to one another, the field formers (8, 9) providing a space between them for introducing a weld part with a substantially rectangular cross section.

3. Welding device according to claim 2, **characterised in that** the field formers (8, 9) are connected at both ends to the system, the latter being a mouth-piece (7), which can be brought into contact with the surface of workpiece.

## Patentansprüche

1. Schweißvorrichtung mit einem Halter für ein an einem Werkstück (2) anzuschweißendes Schweißteil (1), wobei der Halter vorzugsweise im wesentlichen senkrecht zu einer Oberfläche des Werkstückes (2) und von dieser weg bewegbar ist, wobei die Schweißvorrichtung weiterhin eine Einrichtung zum Erzeugen eines Lichtbogens zwischen dem Schweißteil (1) und der Oberfläche des Werkstücks (2) aufweist, ein Mundstück (7), das zur Anlage an die Oberfläche des Werkstücks (2) bringbar ist, und wenigstens einen mit dem Mundstück (7) verbundenen Feldformer (3) zur Erzeugung eines auf den Lichtbogen einwirkenden magnetischen Feldes, der wenigstens teilweise aus einem weichmagnetischen Stahl besteht, **dadurch gekennzeichnet, dass** an entgegengesetzten Enden des Mundstücks (7) zwei U-förmige Feldformer (3) vorgesehen sind, die jeweils zwei freie und über eine gemeinsame Basis (6) verbundene Schenkel (4, 5) aufweisen, wobei die Schenkel (4, 5) der gegenüberliegenden Feldformer zueinander weisen und die Feldformer (3) zwischen den Schenkeln (4, 5) einen Abstand aufweisen, um ein Schweißteil (1) von im wesentlichen rechteckigem Querschnitt dazwischen einzubringen.

2. Schweißvorrichtung mit einem Halter für ein an einem Werkstück (2) anzuschweißendes Schweißteil (1), wobei der Halter vorzugsweise im wesentlichen senkrecht zu einer Oberfläche des Werkstückes (2) und von dieser weg bewegbar ist, wobei die Schweißvorrichtung weiterhin eine Einrichtung zum Erzeugen eines Lichtbogens zwischen dem Schweißteil (1) und der Oberfläche des Werkstücks (2) aufweist, sowie eine Einrichtung mit wenigstens einem Feldformer (8, 9) zur Erzeugung eines auf den Lichtbogen einwirkenden magnetischen Feldes, der wenigstens teilweise aus einem weichmagnetischen Stahl besteht, **dadurch gekennzeichnet, dass** zwei Feldformer (8, 9) vorgesehen sind, die im wesentlichen stabförmig ausgebildet, mit der Einrichtung verbunden sind und im wesentlichen parallel zueinander verlaufen, wobei zwischen den Feldformern (8, 9) ein Abstand vorgesehen ist, um ein Schweißteil von im wesentlichen rechteckigem Querschnitt dazwischen einzubringen.

3. Schweißvorrichtung nach Anspruch 2, **dadurch gekennzeichnet, dass** die Feldformer (8, 9) an beiden Enden mit der Einrichtung verbunden sind, wobei die Einrichtung ein Mundstück (7) darstellt, das zur Anlage an die Oberfläche des Werkstücks bringbar ist.

## Revendications

1. Dispositif de soudage avec un support pour une partie à souder (1) devant être soudée sur une pièce de fabrication (2), le support étant de préférence adapté pour être déplacé sensiblement perpendiculairement par rapport à une surface de la pièce de fabrication (2) et en s'éloignant de celle-ci, le dispositif de soudage comprenant en outre un système pour produire un arc entre la partie à souder (1) et la surface de la pièce de fabrication (2), une embouchure (7), qui peut être amenée en contact avec la surface de la pièce de fabrication (2), et relié à une embouchure (7), au moins un producteur de champ (3) pour produire un champ magnétique qui agit sur l'arc et consiste au moins en partie en acier à faible pouvoir de rétention, **caractérisé en ce que** deux producteurs de champ en forme de U (3) sont fournis à des extrémités opposées de l'embouchure (7), chaque producteur de champ comprenant deux bras libres (4, 5) reliés par une base commune (6), dans lequel les bras (4, 5) des producteurs de champ opposés sont dirigés les uns vers les autres et les producteurs de champ (3) fournissent un espace entre les bras (4, 5) pour l'introduction d'une partie à souder (1) avec une section sensiblement rectangulaire.

2. Dispositif de soudage avec un support pour une partie à souder (1) devant être soudée sur une pièce de fabrication (2), le support étant de préférence adapté pour être déplacé sensiblement perpendiculairement par rapport à la surface de la pièce de fabrication (2) et en s'éloignant de celle-ci, le dispositif de soudage comprenant en outre un système pour produire un arc entre la partie à souder (1) et la surface de la pièce de fabrication (2) et un système avec au moins un producteur de champ (8, 9) pour produire un champ magnétique qui agit sur l'arc et consiste au moins en partie en acier à faible pouvoir de rétention, **caractérisé en ce que** deux producteurs de champ (8, 9) sont fournis qui sont sensiblement en forme de tige en conception, reliés au système et s'étendent sensiblement parallèlement l'un à l'autre, les producteurs de champ (8, 9) fournissant un espace entre eux pour introduire une partie à souder avec une section sensiblement rectangulaire.

3. Dispositif de soudage selon la revendication 2, **caractérisé en ce que** les producteurs de champ (8, 9) sont reliés aux deux extrémités au système, celui-ci étant une embouchure (7), qui peut être amenée en contact avec la surface de la pièce de fabrication.
